# DEMANDE DE BREVET EUROPEEN

(11) **EP 1 314 368 A1**
(43) Date de publication de la demande: **28.05.2003**
(21) Numéro de dépôt: 02024346.5
(22) Date de dépôt: 02.11.2002
(51) Int. Cl.: A43B 13/12, A43B 23/16, A43B 7/14, A43C 1/00

(54) **Elément de renfort composite**

(30) Priorité: 21.11.2001 FR 0115209
(71) Demandeur: Salomon S.A., 74370 Metz-Tessy (FR)
(72) Inventeur: Delgorgue, Gérald, 73310 Ruffieux (FR); Farcot, David, 74000 Annecy (FR)

(57) **Abrégé**

De préférence, l'élément de renfort en matériau composite est caractérisé en ce qu'il est constitué d'une couche de matériau textile inextensible (40) et d'une couche de matériau polymère (41) assemblée à la couche de matériau textile au cours de l'étape de moulage ou vulcanisation.

L'élément de renfort est caractérisé en ce que le matériau textile (41) est un matériau tissé ou en grille, et en ce que le matériau textile (41) est à base de polyester, polyamide, polypropylène, fibre de verre.

Le matériau polymère peut être un thermodurcissable tel que du caoutchouc ou du silicone, ou un thermoplastique injectable tel que du polyuréthane, polychlorure de vinyle, polypropylène.

Avantageusement, le matériau polymère est au moins partiellement transparent.

## Description

La présente invention concerne un élément de renfort en matériau composite destiné notamment à une application en chaussure ou fixation utilisant des sangles de serrage.

Actuellement, les renforts utilisés en chaussure par exemple au niveau du talon ou comme volet de serrage sont réalisés par moulage par injection en matériau polymère tel que du polyuréthane (PU), un polyether amide ou un polyester thermoplastique (par exemple matériau connu sous la dénomination commerciale hytrel).

De tels renforts présentent l'inconvénient d'être très coûteux à réaliser du fait notamment de l'investissement nécessaire en moules par injection.

Il est également connu en chaussure de marche/randonnée d'avoir des volets de serrage externe en matière synthétique. De tels volets de serrage sont connus par exemple par le FR 2 694 167 ou le FR 2 749 739.

Ces volets de serrage sont fixés à une extrémité inférieure soit sur la tige, soit entre la tige et la semelle externe, en prise de montage, et comportant à leur extrémité supérieure des passants ou similaires aptes à coopérer avec des moyens de serrage de type lacet. Ces volets de serrage remplissent deux fonctions, à la fois de serrage et de protection du pied.

Dans le mode de réalisation du FR 2 694 167, le volet de serrage était disposé de façon asymétrique et était réalisé en polyuréthane. Or, du fait de l'élasticité de ce matériau, l'effet de serrage obtenu était trop fort, le volet PU s'étirant lors de l'action de serrage et se rétractant ensuite, provoquant ainsi une tension de serrage trop élevée.

Dans le mode de réalisation décrit dans le FR 2 749 739, le volet de serrage est fixé sur deux tiers de sa hauteur sur une plaque mince du même matériau et sa longueur élastique est donc fortement réduite.

De tels volets de serrage pourraient également être réalisés en polyether amide (tel que le matériau connu sous la dénomination commerciale Pebax) qui sont des matériaux moins élastiques, mais ces matériaux sont très coûteux.

Le polyuréthane est donc en général le matériau préféré pour ses qualités mécaniques et de résistance à l'usure. Il reste cependant coûteux à mettre en oeuvre dans la mesure où il nécessite des moules d'injection.

De plus, sa relative élasticité impose de réaliser des renforts d'une grande épaisseur ou avec des formes compliquées si on souhaite une résistance à la traction suffisante.

Il est également connu par différents brevets et notamment le EP 697 957 de réaliser des chaussures en injectant du PU sur une chaussette mise en forme à l'intérieur d'un moule. De tels procédés d'injection en trois dimensions nécessitent des moules très compliqués et onéreux. De plus, la chaussette sur laquelle est injecté le matériau polyuréthane est nécessairement en matériau extensible, notamment pour permettre le démoulage de la chaussure et la flexion de celle-ci dans certaines zones.

En ce qui concerne les sangles de serrage de fixations, notamment celles de fixations de snowboard, elles doivent satisfaire à des exigences très contradictoires. En effet, elles doivent tout d'abord assurer un maintien en traction de la chaussure sur l'article de sport et doivent donc être inextensibles. Elles doivent par ailleurs assurer l'ancrage, sans fluage de matériau, des organes de liaison/serrage à l'article de sport tel que vis de fixation, système de serrage à cliquet,... etc. Elles doivent répartir la pression de serrage sur le pied de façon à ne pas créer de point de pression douloureux. Elles doivent être souples en torsion et en flexion, sans points durs notamment au niveau des zones d'accroche des organes de liaison/serrage. Ces différentes exigences sont généralement satisfaites par un empilage de différentes couches assurant chacune l'une des fonctions souhaitées.

Ainsi, la sangle comprend généralement :
- une mousse, en principe habillée, pour le confort et éviter les pressions trop localisées,
- des inserts disposés au niveau des zones d'ancrage des organes de liaison/serrage de la sangle,
- un renfort inextensible disposé soit à l'intérieur de la sangle entre deux couches de mousse, soit à l'extérieur.

Une telle construction est très onéreuse du fait de l'empilage de couches et du nombre de liaisons par coutures nécessaires entre ces différentes couches.

Par ailleurs, elle ne permet pas beaucoup de flexibilité en ce qui concerne la forme du renfort. Par la demande de brevet FR 01.13928 au nom de la demanderesse, il a été proposé d'améliorer l'insert en lui ajoutant au moins une languette transversale de façon à lui conférer un gradient de rigidité dans une direction transversale à la sangle, c'est-à-dire dans une direction longitudinale de la chaussure.

Une telle construction permet en effet de limiter l'effet "ficelle", c'est-à-dire de surpression obtenue par un élément de serrage plus ou moins filiforme en répartissant les efforts de serrage par les languettes transversales.

Une telle forme d'insert permet des améliorations indéniables par rapport aux sangles de serrage existant, cependant les formes d'insert sont limitées du fait des exigences d'assemblage par coutures aux autres couches de la sangle.

Le but de la présente invention est de remédier à ces inconvénients et de fournir un nouvel élément de renfort composite qui présente les mêmes caractéristiques de résistance mécanique que les renforts connus tout en étant peu coûteux à mettre en oeuvre.

Le but de la présente invention est également de fournir un élément de renfort qui puisse être utilisé pour transmettre des efforts de traction, par exemple pour le serrage d'une chaussure autour du pied de l'utilisateur, que la chaussure soit une chaussure souple ou rigide, ou dans un dispositif de fixation d'une chaussure à un engin de sport, ou d'un accessoire, tel que guêtre, à une chaussure.

Ce but ou ces buts sont atteints par le fait que l'élément de renfort est constitué d'une couche de matériau textile inextensible et d'une couche de matériau polymère assemblé à la couche de matériau textile lors d'une étape de moulage ou de vulcanisation.

Le matériau textile inextensible est de préférence un matériau tissé à base de fils polyester, polypropylène, fibre de verre, polyamide, de façon à résister aux températures de moulage/injection et/ou de vulcanisation.

De toute façon, l'invention sera bien comprise et d'autres caractéristiques de celle-ci seront mises en évidence à l'aide de la description qui suit en référence au dessin schématique annexé, en illustrant à titre d'exemple non limitatifs plusieurs modes de réalisation et dans lequel :
- la figure 1 est une vue en perspective éclatée d'un renfort selon un premier mode de réalisation appliqué à une chaussure,
- la figure 2 est une vue en perspective d'une chaussure munie d'un renfort selon un second mode de réalisation,
- la figure 3 est une vue en coupe selon III-III de la figure 1,
- la figure 4 est une vue en perspective d'une sangle de serrage,
- la figure 5 est une vue en coupe selon V-V de la figure 4.

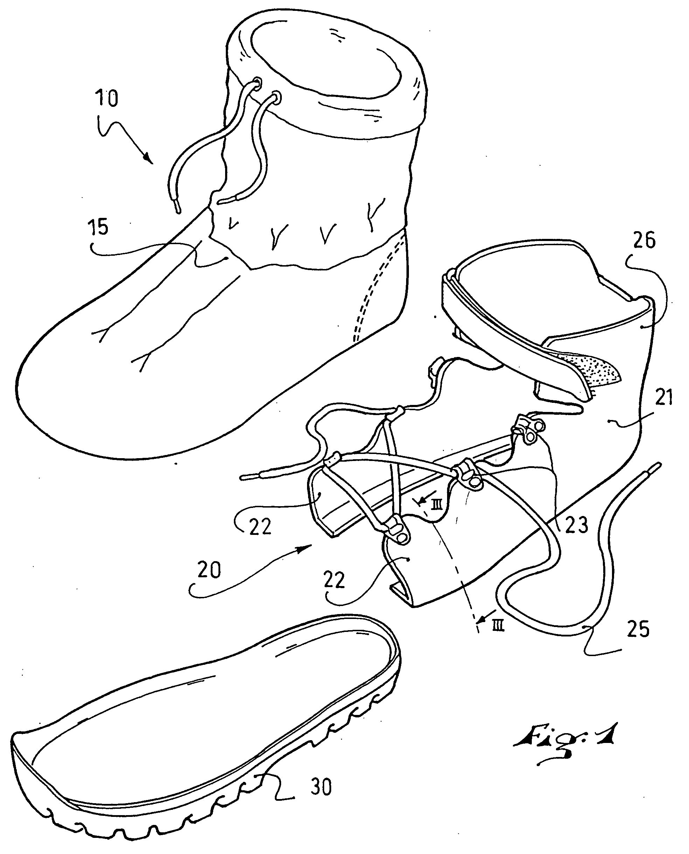

La figure 1 montre un exemple de réalisation d'un renfort composite 20 selon l'invention et son application à une chaussure comportant une tige haute 10 et une semelle externe 30. dans ce cas, le renfort composite 20 se présente sous la forme d'un étrier entourant le talon de la chaussure par un renfort talon 21 et remontant vers le haut par un collier 26 pour entourer le bas de jambe. De plus, le renfort 20 comporte deux volets latéraux 22 reliés au contrefort arrière 21 et recouvrant la tige 10 depuis la semelle externe 30 jusqu'au niveau du cou de pied 15 de la tige.

Chaque volet latéral 22 comporte à son extrémité supérieure des passants 23 destinés à recevoir un lacet 25 ou similaire pour le serrage de la tige externe 10 de la chaussure dans la zone du cou de pied.

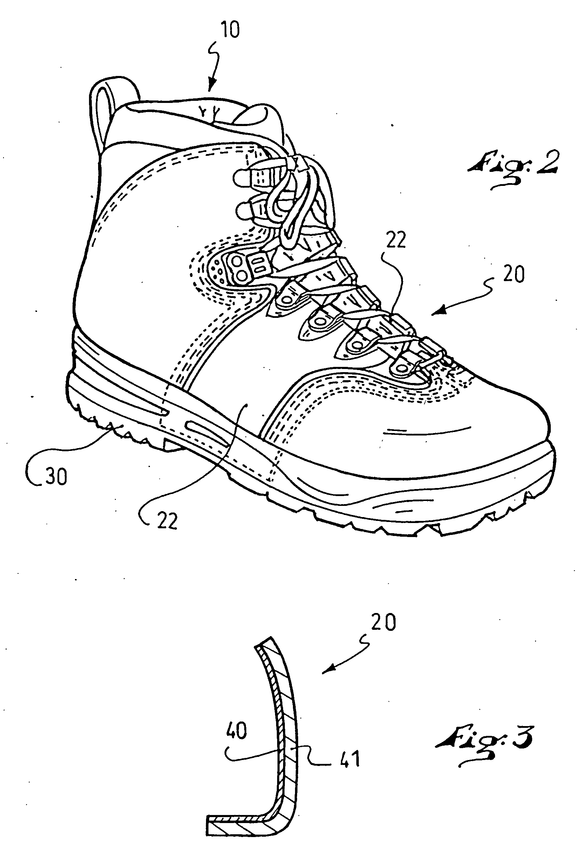

La figure 2 illustre un autre mode de réalisation dans lequel les éléments similaires ou identiques seront désignés par les mêmes références numériques.

Dans ce cas le renfort composite 20 est réalisé sous forme de deux volets latéraux 22, fixés latéralement à leur extrémité inférieure sur la tige 10 de la chaussure ou entre la tige 10 et la semelle 30 dans la zone de prise de montage, et munis à leur extrémité supérieure de passants destinés à coopérer avec un lacet pour le serrage de la chaussure autour du pied de l'utilisateur.

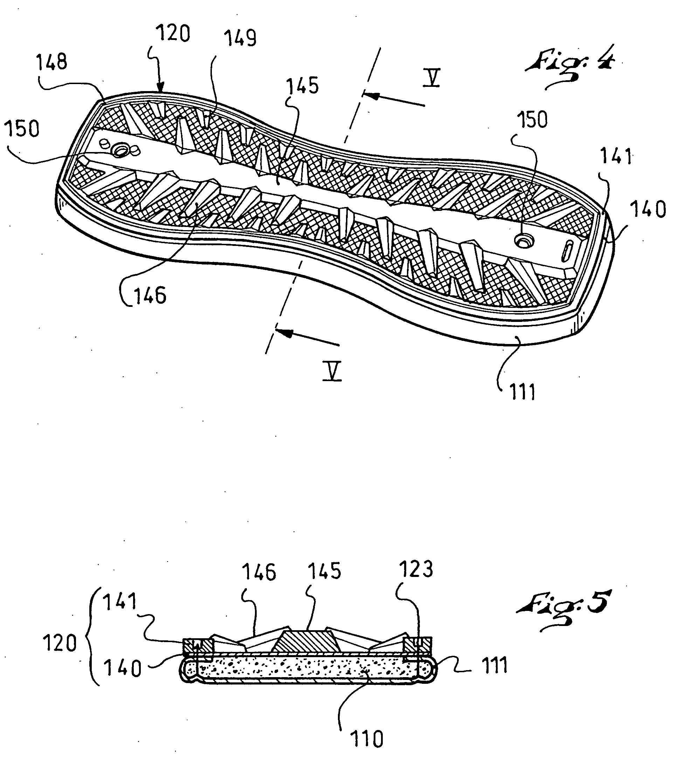

Dans chaque cas, comme le montre la figure 3, le renfort composite 20 est constitué d'une couche de matériau textile inextensible 40 et d'une couche de matériau polymère 41. Le matériau polymère peut être un thermodurcissable tel que du caoutchouc ou du silicone.

Dans le cas du caoutchouc, le procédé de fabrication consiste à mettre dans un moule :
- une ébauche de caoutchouc prédécoupé,
- une couche de matériau inextensible,
- et à porter l'ensemble à une température d'environ 150°C pendant environ 7 à 10mn.

On obtient ainsi une liaison parfaite du matériau textile au caoutchouc lors de l'étape de vulcanisation.

Le matériau polymère peut également être un thermoplastique injectable tel que du polyuréthane, du polychlorure de vinyle, du polypropylène,...etc.

Dans ce cas, le procédé de fabrication consiste à mettre la couche de matériau inextensible dans le moule et à injecter le matériau polymère.

Enfin, le matériau polymère peut être un polyuréthane coulé, c'est-à-dire un polyuréthane dont le moulage s'effectue par simple gravité.

Dans tous les cas, le matériau textile sera un matériau de type tissé ou grille, c'est-à-dire un matériau inextensible selon ses deux directions principales de tissage, et sera de préférence, et en fonction du mode de fabrication utilisé, un matériau résistant à des températures de l'ordre de 150°C (pour une association à un caoutchouc) et/ou de 200 à 240°C (pour une association avec un matériau polymère thermoplastique), ce pourra être par exemple un polyester ou un polyamide.

Dans tous les cas, à l'issue du processus de moulage/injection on obtient une liaison parfaite de la couche de matériau polymère avec la couche de tissu inextensible.

De plus, le matériau textile compense par son inextensibilité, les caractéristiques élastiques du polymère utilisé et le renfort composite ainsi obtenu peut être utilisé pour exercer des efforts de traction et de serrage sans risque de déformation élastique et/ou de fluage dudit matériau.

A caractéristiques équivalentes, un tel renfort composite est par ailleurs beaucoup moins onéreux qu'un renfort polymère usuel, dans la mesure où le matériau textile confère au polymère des caractéristiques de résistance à la traction accrues.

Par exemple, un composite textile/caoutchouc ainsi obtenu est meilleur marché et beaucoup moins élastique qu'un renfort PU traditionnel.

Un tel composite textile/caoutchouc peut supporter des efforts sensiblement plus élevés qu'un renfort en PU traditionnel sans déformation. A titre d'exemple non limitatif, les efforts de traction exercés localement au niveau d'un seul passant d'un tel renfort peuvent être compris entre 15 à 20 daN sans déformation, alors qu'avec les renforts traditionnels en PU, 15 daN est une valeur à ne pas dépasser, les déformations étant déjà trop importantes.

Le renfort composite 20 peut être fixé sur la tige de la chaussure par coutures ou par collage, notamment par une colle à base de PU.

De préférence, le renfort composite est moulé à plat, ce qui nécessite des moules plus simples et donc moins coûteux.

Selon un mode de réalisation préféré, le polymère utilisé est transparent ou translucide de façon à laisser apparaître la couche de tissu située en dessous. Dans ce cas, on obtient à faibles coûts des effets esthétiques très divers et variés en changeant simplement la couleur et/ou le dessin du tissu. La transparence permet également de visualiser facilement des défauts et permet donc un contrôle qualité plus facile.

Les figures 4 et 5 montrent un exemple d'application du renfort composite selon l'invention à une sangle de serrage de fixation de snowboard. Cette sangle se compose de manière usuelle d'une couche de mousse 110 entourée d'un tissu de protection 111 et d'un renfort 120. Dans ce cas, le renfort 120 est en un matériau composite constitué d'une couche de matériau textile inextensible 140 et d'une couche de matériau polymère 141 assemblés ensemble au cours de l'opération de moulage/injection.

Comme dans les cas précédents, le matériau polymère peut être un thermoplastique injectable tel que du polyuréthane, polychlorure de vinyle, polypropylène,...etc., un polyuréthane coulé ou un thermodurcissable tel que du caoutchouc ou du silicone. Le matériau textile sera par exemple un polyester ou un polyamide. Le renfort composite 120 ainsi réalisé est assemblé à la couche de mousse inférieure par une couture périphérique 123 réalisée soit sur le pourtour 148 du matériau polymère comme représenté, soit par l'intermédiaire du textile inextensible dudit renfort. Dans ce dernier cas, la couture peut être jointée et retournée pour un effet d'assemblage "invisible".

Bien entendu, d'autres modes de fixation peuvent également être prévus. La couche de matériau polymère 141 a une forme telle que décrite dans le FR 01.13928 précédemment cité, à savoir une branche longitudinale 145, munie de trous 150 de fixation des organes de serrage ou d'ancrage de la sangle, et des branches transversales 146. Un tel assemblage de renfort composite 120 permet toutes formes de réalisation du matériau polymère le constituant, puisqu'on est affranchi de l'obligation de coudre chacune des languettes 146 une par une sur les autres couches de la sangle. Le renfort composite 120 peut donc comporter une couche de matériau polymère 141 de forme très fine et aérée. En l'occurrence, la couche de matériau polymère 141 peut comporter comme représenté sur la figure 4 un mince pourtour fermé 148 à l'intérieur duquel s'étend la branche longitudinale 145 et de fines languettes transversales supplémentaires 149 issues de ce pourtour et orientées vers l'intérieur. Toutes les formes sont ainsi autorisées.

De plus, différents autres effets esthétiques peuvent être obtenus en changeant le dessin du matériau textile 140 et/ou en modifiant la transparence et/ou la couleur de la couche du matériau polymère 141. De même, le tissu constituant le renfort peut être placé à l'extérieur ou conservé en dessous de la couche polymère suivant l'effet esthétique recherché.

Par ailleurs, la sangle ainsi obtenue a, pour une épaisseur réduite du renfort polymère, des caractéristiques mécaniques bien supérieures aux sangles classiques, les essais montrent en effet une très nette augmentation de la résistance à la traction, et une amélioration des propriétés élastiques de l'ensemble. La sangle est également beaucoup plus légère puisqu'il n'est plus nécessaire d'avoir de fortes épaisseurs de matériau polymère pour obtenir la raideur souhaitée dans une direction donnée. Par ailleurs, la sangle résiste beaucoup mieux au fluage que les renforts habituellement utilisés notamment dans les zones 150 d'ancrage ou de fixation des organes de réglage, qui n'ont pas besoin d'être renforcées.

A titre d'exemple non limitatif, une sangle en composite textile/PP ou textile/PU selon l'invention supporte une augmentation d'efforts de traction de 350N, c'est-à-dire le double par rapport à une sangle traditionnelle. La résistance à la rupture est également multipliée par un facteur 2 à 4 selon les matériaux employés.

Bien entendu, la présente invention n'est pas limitée aux modes de réalisation décrits ci-avant à titre d'exemples non limitatifs, mais englobe tous les modes de réalisation similaires ou équivalents.

Elle s'applique notamment à tout type de renforts de chaussures, que celles-ci soient en matière souple, telles que des chaussures de marche, ou rigide telles que les chaussures de ski alpin. Elle s'applique également à tout type de sangle de serrage ou tout élément pour lesquels des problèmes similaires de résistance à la traction doit être résolu.

Bien entendu, les valeurs d'efforts données ci-avant le sont à titre indicatif, ces valeurs pouvant être modifiées en fonction des matériaux, formes et épaisseurs de matériaux choisis pour un but recherché spécifique.

## Revendications

1. Elément de renfort en matériau composite, **caractérisé en ce qu'**il est constitué d'une couche de matériau textile inextensible (40, 140) et d'une couche de matériau polymère (41, 141) assemblée à la couche de matériau textile au cours de l'étape de moulage ou vulcanisation.

2. Elément de renfort selon la revendication 1, **caractérisé en ce que** le matériau textile (41, 141) est un matériau tissé ou en grille.

3. Elément de renfort selon l'une des revendications 1 ou 2, **caractérisé en ce que** le matériau textile (41, 141) est à base de polyester, polyamide, polypropylène, fibre de verre.

4. Elément de renfort selon l'une quelconque des revendications 2 à 3, **caractérisé en ce que** le matériau polymère est un thermodurcissable tel que du caoutchouc ou du silicone.

5. Elément de renfort selon l'une quelconque des revendications 2 à 3, **caractérisé en ce que** le matériau polymère est un thermoplastique injectable tel que du polyuréthane, polychlorure de vinyle, polypropylène.

6. Elément de renfort selon l'une quelconque des revendications 2 à 3, **caractérisé en ce que** le matériau polymère est un polyuréthane coulé.

7. Elément de renfort selon l'une quelconque des revendications 1 à 6, **caractérisé en ce que** le matériau polymère est au moins partiellement transparent.

8. Procédé de fabrication d'un élément de renfort en matériau composite, **caractérisé en ce qu'**il consiste à mettre dans un moule :
- une ébauche de caoutchouc pré-découpé,
- une couche de matériau textile inextensible,
- et à passer l'ensemble à chaud à environ 150°pendant environ 7 à 10mn.

9. Chaussure comportant un élément de renfort selon l'une quelconque des revendications 1 à 8.

10. Chaussure selon la revendication 5, **caractérisée en ce que** le renfort (20) est collé à la tige par une colle à base PU.

11. Chaussure selon l'une quelconque des revendications 9 ou 10, **caractérisée en ce que** le renfort (20) est muni de moyens de serrage.

12. Elément de fixation d'une chaussure à un engin de sport, **caractérisé en ce qu'**il comporte un élément de renfort (120) selon l'une quelconque des revendications 1 à 10.

13. Elément de fixation selon la revendication 12, **caractérisé en ce qu'**il est constitué par une sangle de serrage.
